# FASCICULE DE BREVET EUROPEEN

(11) **EP 3 164 281 B1**
(45) Date de publication et mention de la délivrance du brevet: **13.10.2021**
(21) Numéro de dépôt: 14747967.9
(22) Date de dépôt: 04.07.2014
(51) Int. Cl.: B60H 3/02, F24F 6/00, F24F 3/16

(54) **DISPOSITIF DE FOURNITURE DE LIQUIDE ASSAINI POUR UN DISPOSITIF DE TRAITEMENT D'AIR INTÉGRÉ DANS UN ÉQUIPEMENT**
VORRICHTUNG ZUR ZUFÜHRUNG VON GEREINIGTER FLÜSSIGKEIT FÜR EINE IN EINE EINRICHTUNG EINGEBAUTE LUFTBEHANDLUNGSVORRICHTUNG
DEVICE FOR SUPPLYING PURIFIED LIQUID FOR AN AIR TREATMENT DEVICE BUILT INTO AN APPARATUS

(43) Date de publication de la demande: 10.05.2017
(73) Titulaire: PSA Automobiles SA, 78300 Poissy (FR)
(72) Inventeur: KERVAREC, Florian, F-91310 Longpont Sur Orge (FR); PINTAT, Bruno, F-92140 Clamart (FR); DUMUR, Denis, F-78990 Elancourt (FR); POT, Vincent, F-75013 Paris (FR)
(86) Numéro de dépôt international: PCT/FR2014/051726
(87) Numéro de publication internationale: WO 2016/001493

(56) Documents cités:
- WO-A1-2008/002123
- FR-A1- 3 008 168
- JP-A- H04 303 016
- JP-A- S60 104 410
- JP-A- S61 181 718
- JP-A- 2007 315 633
- None

## Description

L'invention concerne les dispositifs qui sont chargés de fournir du liquide à un dispositif de traitement d'air faisant partie d'un équipement.

Certains systèmes, comme par exemple certains véhicules (éventuellement de type automobile) ou certaines installations industrielles ou encore certains bâtiments, comprennent au moins une enceinte ayant au moins une partie alimentée par un flux d'air traité délivré par un dispositif de traitement d'air.

On notera que l'on entend ici par « flux d'air traité » un flux d'air ayant fait l'objet d'un rafraichissement par adjonction de petites gouttes de liquide produites au moyen d'une technique de nébulisation, de brumisation ou de pulvérisation.

Lorsque le dispositif de traitement d'air fait partie d'un équipement logé dans une enceinte et comportant un logement interne réduit et/ou difficilement accessible, il est généralement impossible de loger le réservoir qui l'alimente en liquide dans cet équipement. Par conséquent, ce réservoir doit être déporté à une certaine distance de l'équipement. C'est notamment le cas lorsque l'équipement est un plafonnier de véhicule ou une console placée entre deux sièges d'un même rang.

Ce déport du réservoir loin du dispositif de traitement d'air impose l'utilisation d'un tuyau de couplage d'une grande longueur. Or, comme le sait l'homme de l'art, plus la longueur d'un tuyau est importante, plus on augmente la probabilité que des gouttes de liquide stagnent dans ce tuyau et/ou que des gouttes de condensation se déposent sur des parois internes de ce tuyau, ce qui favorise, hélas, le développement de bio films et/ou de bactéries et/ou d'algues, qui induisent généralement des odeurs nauséabondes dans l'enceinte concernée, et/ou de virus, qui peuvent ensuite diffuser dans l'enceinte concernée. Ces inconvénients sont en outre amplifiés du fait de développements similaires survenant dans le réservoir distant.

Afin de limiter ces développements, autant que faire se peut, plusieurs solutions ont déjà été proposées. Une première solution consiste à équiper le réservoir de résistances chauffantes qui sont destinées à chauffer le liquide qu'il contient à une température propre à l'assainir (typiquement entre environ 50°C et environ 70°C). Mais cela augmente notablement le coût du réservoir, complexifie sa fabrication, consomme de l'énergie électrique, et ne résout pas le problème des développements dans le long tuyau d'alimentation.

Une deuxième solution consiste à adjoindre un produit de traitement (désinfectant ou décontaminant) dans le liquide stocké dans le réservoir, mais, cela peut induire des odeurs désagréables dans l'enceinte. En outre, cela impose des interventions manuelles, généralement relativement difficiles (du fait de l'exiguïté), pour renouveler régulièrement le produit de traitement.

Une troisième solution consiste à effectuer des purges régulières du réservoir. Mais cela nécessite des interventions manuelles, généralement relativement difficiles (du fait de l'exiguïté), pour renouveler intégralement et régulièrement le liquide. En outre, cela ne résout pas le problème des développements dans le long tuyau d'alimentation.

Le document JPS61181718A décrit un dispositif humidificateur dont le réservoir est extractible, le dispositif étant inclus dans une console centrale.

Le document WO2008/002123A1 décrit un dispositif humidificateur comprenant un réservoir contenant du liquide et des moyens de traitement du liquide par un rayonnement de type UV-C.

L'invention a donc pour but d'améliorer la situation.

Elle propose notamment à cet effet un dispositif, destiné à fournir du liquide assaini à un dispositif de traitement d'air logé dans un équipement, et comprenant :
- des moyens d'alimentation propres à être couplés de façon étanche à un orifice de sortie, d'un réservoir contenant un liquide et logé dans l'équipement de façon extractible par une ouverture définie dans une paroi, et à un orifice d'alimentation du dispositif de traitement d'air, et
- des moyens d'assainissement propres à être placés dans l'équipement derrière un carter contrôlant l'accès à l'ouverture, et agencés pour assainir le liquide contenu dans le réservoir par un traitement choisi, lesdits moyens d'assainissement étant agencés pour réaliser un traitement lumineux, ledit carter étant réalisé dans un matériau translucide propre à laisser passer une partie de la lumière produite par lesdites moyens d'assainissement du dispositif de fourniture de liquide lors d'un traitement.

Le réservoir pouvant être placé très près du dispositif de traitement d'air et alimentant ce dernier en liquide assaini, la probabilité de développement de bio films et/ou de bactéries et/ou d'algues et/ou de virus est donc très faible.

Le dispositif de fourniture de liquide selon l'invention peut comporter d'autres caractéristiques qui peuvent être prises séparément ou en combinaison, et notamment :
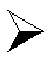 ses moyens d'assainissement peuvent comprendre au moins une source de lumière ultraviolette ; 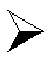
ses moyens d'assainissement peuvent être solidarisés à une face interne du carter qui est orientée vers le réservoir ;
   - en variante, ses moyens d'assainissement peuvent comporter un filtre propre à traiter chimiquement le liquide ;
   - ses moyens d'alimentation peuvent comprendre, d'une part, un tuyau d'alimentation comportant une première extrémité, propre à être connectée à l'orifice d'alimentation, et une seconde extrémité, et, d'autre part, un bouchon comportant un orifice auquel sont connectés de façon étanche la seconde extrémité du tuyau d'alimentation et une extrémité d'un tuyau plongeur propre à être logé dans le réservoir ;
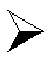 le bouchon peut comprendre un filetage interne propre à permettre son vissage sur un filetage externe d'un col d'une bouteille constituant le réservoir ;
   - il peut comprendre le réservoir.

L'invention propose également un équipement comprenant un dispositif de traitement d'air, une paroi comportant au moins une ouverture dont l'accès est contrôlé par un carter, et au moins un dispositif de fourniture de liquide du type de celui présenté ci-avant et couplé à un réservoir contenant un liquide et au dispositif de traitement d'air.

L'équipement selon l'invention peut comporter d'autres caractéristiques qui peuvent être prises séparément ou en combinaison, et notamment :
- son dispositif de traitement d'air peut être agencé pour transformer le liquide assaini, issu du réservoir, en petites gouttes au moyen d'une technique choisie parmi (au moins) la nébulisation, la brumisation et la pulvérisation ;
- son carter peut comprendre une face interne munie de moyens de fixation propres à permettre la solidarisation du réservoir ;
- il peut constituer un plafonnier.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue en perspective du côté intérieur, un exemple d'équipement comprenant un exemple de dispositif de traitement d'air couplé à un exemple de réalisation d'un dispositif de fourniture de liquide selon l'invention,
- la figure 2 illustre schématiquement, dans une vue en perspective du côté extérieur, l'équipement de la figure 1 avec son carter fermé, et
- la figure 3 illustre schématiquement, dans une vue en perspective de côté, l'équipement de la figure 1 avec son carter ouvert.

L'invention a notamment pour but de proposer un dispositif de fourniture de liquide D1 destiné à faire partie d'un équipement PV pouvant être installé dans une enceinte d'un système et comportant un dispositif de traitement d'air D2.

On considère dans ce qui suit, à titre d'exemple non limitatif, que le système dans lequel le dispositif suivant l'invention est installé est un véhicule automobile, comme par exemple une voiture. Mais l'invention n'est pas limitée à ce type de système. Elle concerne en effet tout type de système comportant au moins une enceinte ayant au moins une partie devant être alimentée par un flux d'air traité produit par un dispositif de traitement d'air D2. Par conséquent, l'invention concerne non seulement les véhicules, quel qu'en soit le type (terrestre (y compris les trains et tramways), maritime (ou fluvial) ou aérien), mais également les installations industrielles comportant au moins une pièce ou une salle, et les habitats, les vérandas et les locaux techniques, par exemple.

Par ailleurs, on considère dans ce qui suit, à titre d'exemple non limitatif, que l'équipement PV est un plafonnier devant être solidarisé à la face interne d'un pavillon (ou toit) délimitant une partie d'un habitacle de véhicule. Mais l'invention n'est pas limitée à ce type d'équipement. Elle concerne en effet tout type d'équipement pouvant être installé dans une enceinte d'un système, et notamment les consoles placées entre des sièges d'un même rang (par exemple d'un véhicule).

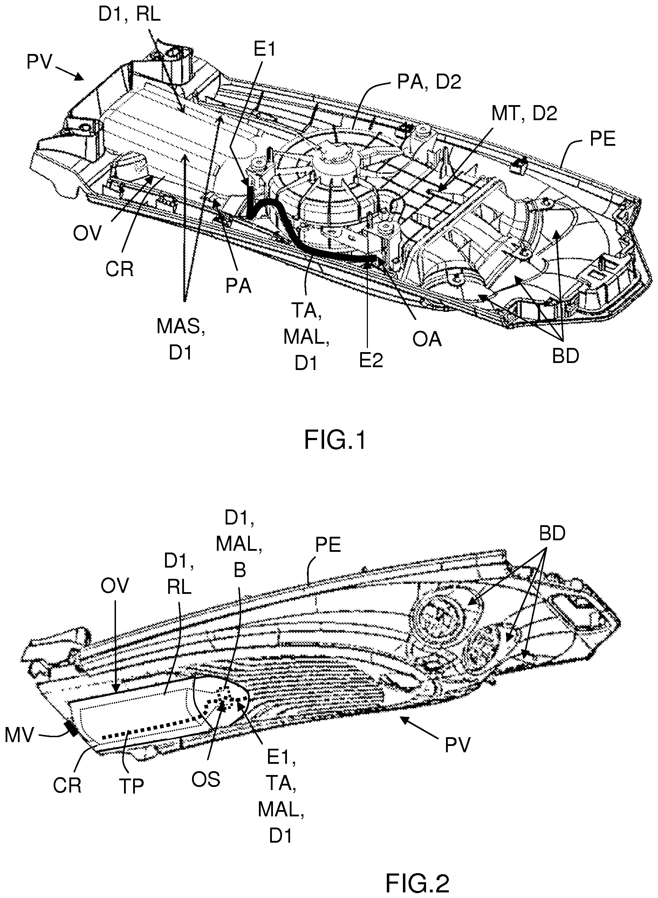

On a schématiquement représenté sur les figures 1 à 3 un exemple non limitatif d'équipement PV (ici un plafonnier), destiné à être installé dans une enceinte (ici un habitacle) d'un système (ici un véhicule). Cet équipement PV loge au moins un dispositif de traitement d'air D2 qui est destiné à fournir au moins un flux d'air traité dans l'habitacle (ou enceinte).

On entend ici par « flux d'air traité » un flux d'air ayant fait l'objet d'un rafraichissement par adjonction de (très) petites gouttes de liquide. On considère dans ce qui suit, à titre d'exemple non limitatif, que le dispositif de traitement d'air D2 comprend des moyens de traitement MT agencés de manière à produire des très petites gouttes de liquide au moyen d'une technique de nébulisation.

Il est rappelé que la nébulisation est une technique avantageuse du fait qu'elle permet de produire, sous la forme d'un «brouillard» ou d'une «brume», des gouttes de très petit diamètre (typiquement compris entre environ 2 µm et environ 5 µm) qui, une fois mélangées à un flux d'air, permettent à ce dernier de procurer une sensation de fraicheur à des passagers. Toute technique de nébulisation connue de l'homme de l'art, y compris miniaturisée, peut être ici utilisée. A titre d'exemple, il peut s'agir d'une technique par effet piézoélectrique, bien connue de l'homme de l'art. Cette technique peut, par exemple, utiliser au moins un oscillateur piézoélectrique (éventuellement miniaturisé), couplé à une chambre de nébulisation et vibrant à très haute fréquence lorsqu'il est alimenté en tension (ici par le réseau électrique du véhicule). Par exemple, dans le cas d'un nébuliseur ultrasonique, la surface vibrante est actionnée par des ultrasons (c'est-à-dire selon une fréquence supérieure à 20000 Hz). Cet oscillateur piézoélectrique peut être immergé dans le liquide à nébuliser afin de générer à la surface de ce liquide une brume ou un brouillard composé(e) de gouttelettes de dimensions microscopiques qui sont entrainées par dépression ou au moyen d'un petit flux d'air généré par un ventilateur de dimensions réduites.

L'alimentation en courant des moyens de traitement MT peut, par exemple, se faire via un câble électrique (non représenté) qui est connecté (ici) au réseau électrique du véhicule. Mais elle pourrait également se faire via une batterie indépendante, comme par exemple une pile.

Les gouttes de liquide, qui sont produites par les moyens de traitement MT à partir du liquide assaini fourni par le dispositif de fourniture de liquide D1, alimentent au moins un conduit dans lequel circule un flux d'air (à traiter) destiné à alimenter au moins une bouche de distribution (ou aérateur) BD solidarisé(e) à une paroi PE de l'équipement PV (au niveau d'une ouverture dédiée) et destinée à alimenter l'enceinte en flux d'air traité.

Ce flux d'air (à traiter par adjonction de petites gouttes de liquide) est fourni par un pulseur PA qui fait partie du dispositif de traitement d'air D2 et qui aspire de l'air dans l'enceinte. L'alimentation en courant de ce pulseur PA peut, par exemple, se faire via un câble électrique (non représenté) qui est connecté (ici) au réseau électrique du véhicule. Mais elle pourrait également se faire via une batterie indépendante, comme par exemple une pile.

On notera que les moyens de traitement MT pourraient être agencés de manière à produire des très petites gouttes de liquide au moyen d'une autre technique que la nébulisation, comme par exemple la brumisation ou la pulvérisation.

On notera également que le dispositif de traitement d'air D2 comprend, en aval d'un orifice d'alimentation OA et en amont de ses moyens de traitement MT, une pompe électrique de dimensions réduites et propre à aspirer du liquide assaini qui est contenu dans le dispositif de fourniture de liquide D1.

Comme illustré sur les figures 1 et 2, un dispositif de fourniture de liquide D1, selon l'invention, comprend des moyens d'alimentation MAL et des moyens d'assainissement MAS.

Les moyens d'alimentation MAL sont propres à être couplés de façon étanche, d'une part, à un orifice de sortie OS d'un réservoir RL qui contient un liquide et qui est logé dans l'équipement PV de façon extractible (ou amovible), et, d'autre part, à un orifice d'alimentation OA du dispositif de traitement d'air D2.

Comme illustré sur les figures 1 à 3, le réservoir RL peut être extrait de l'intérieur de l'équipement PV par une ouverture OV qui est définie dans une paroi PE de ce dernier (PV) et dont l'accès est contrôlé par un carter CR.

Egalement comme illustré sur les figures 1 et 2, les moyens d'alimentation MAL peuvent comprendre un tuyau d'alimentation TA et un bouchon B couplés l'un à l'autre. Le tuyau d'alimentation TA comprend une première extrémité E1 qui est propre à être connectée à l'orifice d'alimentation OA du dispositif de traitement d'air D2, et une seconde extrémité E2, opposée à la première extrémité E1. Le bouchon B comporte un orifice auquel sont connectés de façon étanche la seconde extrémité E2 du tuyau d'alimentation TA et une extrémité d'un tuyau plongeur TP qui est propre à être logé dans le réservoir RL (voir figure 2).

On notera que le bouchon B peut être réalisé en matière plastique (ou synthétique) ou en métal.

On notera également que le réservoir RL peut éventuellement faire partie du dispositif de fourniture de liquide D1, comme illustré non limitativement.

On notera également que le liquide qui est stocké dans le réservoir RL peut, par exemple, être de l'eau, éventuellement minérale et/ou éventuellement additionnée d'une fragrance destinée à parfumer l'enceinte ou bien d'un désinfectant destiné à assainir l'enceinte.

On notera également que le réservoir RL est un réceptacle pouvant se présenter sous différentes formes. Ainsi, il peut s'agir d'une bouteille munie d'un col fileté, éventuellement dédiée, et pouvant éventuellement être remplie par un usager. Dans ce cas, le bouchon B comprend un filetage interne propre à permettre son vissage sur le filetage externe du col. En variante, il pourrait également s'agir d'une cartouche amovible constituant un consommable et initialement munie d'un opercule d'obturation déchirable ou perforable. On comprendra que les dimensions du réservoir RL dépendent de l'espace disponible pour le loger dans l'équipement PV.

On notera également que lorsque le réservoir RL ne comprend pas de filetage externe, le bouchon B peut être emmanché en force. L'étanchéité peut alors nécessiter la présence de joint(s) torique(s).

On notera également que le carter CR comprend une face interne orientée vers le réservoir RL et qui peut, éventuellement, mais avantageusement, être munie de moyens de fixation propres à permettre la solidarisation du réservoir RL. Tout moyen de fixation connu de l'homme de l'art peut être ici envisagé. Ainsi, les moyens de fixation peuvent comporter au moins un clip, ou des pattes flexibles, ou au moins une bande (ou sangle) élastique ou auto-agrippante (par exemple de type velcro®), ou au moins un aimant (si le réservoir RL est réalisé dans un matériau aimanté), ou encore au moins une contre-forme.

On notera également, comme illustré non limitativement sur les figures 1 à 3, que la face interne du carter CR peut éventuellement être concave de manière à loger une partie au moins du réservoir RL. Mais cela n'est pas obligatoire. En effet, l'équipement PV pourrait comporter un logement dédié au réservoir RL, et dans ce cas le carter CR n'a pas besoin d'être spécifiquement configuré pour l'accueil dudit réservoir RL.

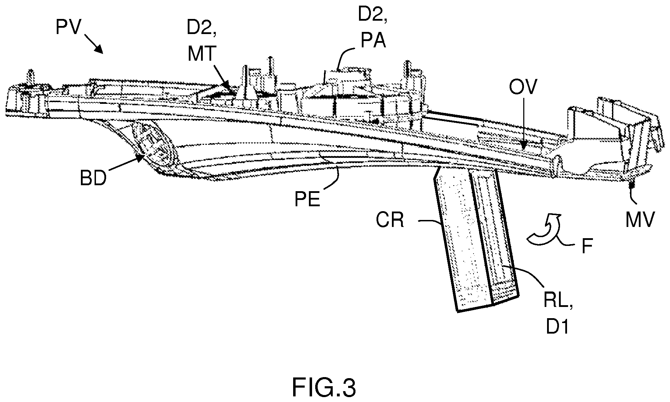

On notera également, comme illustré non limitativement sur la figure 1, que le carter CR peut éventuellement comporter une extrémité montée à rotation sur la paroi PE. A cet effet, cette extrémité peut, par exemple, comporter sur deux côtés opposés deux plots définissant des axes de rotation montés à rotation (par exemple par emmanchement en force) sur des pattes d'ancrage PA définies sur la face interne de la paroi PE à la périphérie de l'ouverture OV. Ainsi, le carter CR peut être entraîné en rotation par rapport à la paroi PE (suivant la flèche F de la figure 3) sans être désolidarisé de cette paroi PE, afin de permettre un remplacement ou un remplissage du réservoir RL.

Dans ce cas, il est préférable que le carter CR et/ou la paroi PE soi(en)t équipé(s) de moyens de verrouillage MV destinés à permettre l'immobilisation du carter CR par rapport à la paroi PE lorsqu'il est dans une position fermée. De tels moyens de verrouillage MV peuvent, par exemple, comporter un loquet coulissant défini sur la paroi PE et destiné à bloquer, dans une position de verrouillage, une autre extrémité du carter CR, opposée à celle qui est montée à rotation. Ce loquet peut soit venir se loger dans une fente définie dans l'autre extrémité du carter CR, soit bloquer une protubérance définie sur l'autre extrémité du carter CR. En variante, les moyens de verrouillage MV pourraient être des clips destinés à coopérer avec des protubérances.

Les moyens d'assainissement MAS sont propres à être placés dans l'équipement PV derrière le carter CR, et sont agencés pour assainir le liquide qui est contenu dans le réservoir RL par un traitement choisi.

Au moins deux traitements différents, mais ayant pour objectif d'assainir le liquide, peuvent être envisagés.

Ainsi, les moyens d'assainissement MAS peuvent être agencés pour réaliser un traitement lumineux. A cet effet, ils (MAS) peuvent comprendre au moins une source de lumière ultraviolette, comprenant par exemple un ensemble de diodes électroluminescentes ou une lampe fluorescente ou une lampe halogène ou encore une lampe ultraviolette. On notera que dans l'exemple non limitatif illustré sur la figure 1, les moyens d'assainissement MAS comprennent deux sources de lumière adaptées à l'assainissement. Mais ils pourraient n'en comporter qu'une seule ou bien ils pourraient en comporter plus de deux (par exemple trois ou quatre).

On notera que chaque source de lumière peut être alimentée en courant via un câble électrique (non représenté) qui est connecté (ici) au réseau électrique du véhicule, ou bien via une batterie indépendante, comme par exemple une pile.

On notera également que chaque source de lumière peut être solidarisée au carter CR, par exemple à sa face interne qui est orientée vers le réservoir RL, soit directement, soit indirectement via d'éventuels moyens de fixation pouvant également et éventuellement servir à la solidarisation du réservoir RL à cette face interne. De tels moyens de fixation peuvent, par exemple, comprendre au moins une bande (ou sangle) élastique ou auto-agrippante (par exemple de type velcro®).

On notera également que le carter CR est, conformément à l'invention, réalisé dans un matériau translucide propre à laisser passer une partie de la lumière qui est produite par les moyens d'assainissement MAS lorsqu'ils sont agencés de manière à réaliser un traitement lumineux avec des photons dont certaines longueurs d'onde sont dans le domaine visible. Cette caractéristique de l'invention est destinée à permettre la réalisation d'un effet lumineux dans l'enceinte. Cet effet lumineux peut notamment être amplifié par les mouvements du liquide dans le réservoir RL (induits ici par le déplacement du véhicule).

Dans une variante de réalisation, qui ne fait pas partie de l'invention telle que revendiquée, le carter CR peut ne pas se présenter sous la forme d'une paroi pleine (ou continue), et éventuellement translucide. En effet, il pourrait également s'agir d'une espèce de grille définissant éventuellement un treillis, éventuellement chromé. Il est en effet rappelé que l'objectif de ce carter CR est de contrôler l'accès à l'ouverture OV et éventuellement de loger une partie du réservoir RL et/ou de maintenir ce dernier (RL).

Dans une variante de réalisation, les moyens d'assainissement MAS peuvent comporter un filtre propre à traiter chimiquement le liquide qui est contenu dans le réservoir RL. Ce filtre peut, par exemple, comprendre des charbons actifs ou du polyphosphate ou un décontaminant antibactérien (tel que du micropur® ou de l'hydrochlonazone®). On notera que dans cette variante la face interne du réservoir RL peut éventuellement comporter un revêtement antibactérien opaque, comme par exemple du dioxyde de titane (TiO₂). On notera que cette variante peut éventuellement nécessiter que les moyens d'assainissement MAS comportent dans la zone d'accueil du réservoir RL des moyens de chauffage destinés à rendre actif le filtre à des instants choisis.

Lorsqu'un usager veut remplacer ou remplir le réservoir RL, il doit, ici, commencer par déverrouiller le loquet des moyens de verrouillage MV, qui est situé sur la paroi PE devant l'une des extrémités du carter CR, pour faire basculer ce dernier (CR) et ainsi rendre le réservoir RL accessible. Puis, l'usager désolidarise le réservoir RL du carter CR et dévisse le bouchon B. Il peut alors prendre un nouveau réservoir RL ou remplir le réservoir RL qu'il a extrait afin de le solidariser au carter CR, puis il entraîne le carter CR en rotation (ici vers le haut suivant la flèche F) afin de le verrouiller dans sa position fermée avec le loquet MV.

L'invention offre plusieurs avantages, parmi lesquels :
- une distance très courte entre le réservoir et les moyens de traitement du dispositif de traitement d'air,
- un très faible coût d'assainissement,
- la possibilité d'utiliser certaines bouteilles du commerce en tant que réservoir.

## Revendications

1. Dispositif (D1) pour la fourniture d'un liquide assaini à un dispositif de traitement d'air (D2) logé dans un équipement (PV), comprenant
i) des moyens d'alimentation (MAL) propres à être couplés de façon étanche à un orifice de sortie (OS), d'un réservoir (RL) contenant un liquide et logé dans ledit équipement (PV) de façon extractible par une ouverture (OV) définie dans une paroi (PE), et à un orifice d'alimentation (OA) dudit dispositif de traitement d'air (D2), le dispositif étant **caractérisé en ce qu'**il comprend
ii) des moyens d'assainissement (MAS) propres à être placés dans ledit équipement (PV) derrière un carter (CR) contrôlant l'accès à ladite ouverture (OV), et agencés pour assainir ledit liquide contenu dans ledit réservoir (RL) par un traitement choisi, lesdits moyens d'assainissement (MAS) étant agencés pour réaliser un traitement lumineux, ledit carter (CR) étant réalisé
dans un matériau translucide propre à laisser passer une partie de la lumière produite par lesdits moyens d'assainissement (MAS) du dispositif de fourniture de liquide (D1) lors d'un traitement.

2. Dispositif selon la revendication 1, **caractérisé en ce que** lesdits moyens d'assainissement (MAS) comprennent au moins une source de lumière ultraviolette.

3. Dispositif selon la revendication 1, **caractérisé en ce que** lesdits moyens d'assainissement (MAS) comportent un filtre propre à traiter chimiquement ledit liquide.

4. Dispositif selon l'une des revendications 1 à 3, **caractérisé en ce que** lesdits moyens d'alimentation (MAL) comprennent i) un tuyau d'alimentation (TA) comprenant une première extrémité (E1), propre à être connectée audit orifice d'alimentation (OA), et une seconde extrémité (E2), et ii) un bouchon (B) comportant un orifice auquel sont connectés de façon étanche ladite seconde extrémité (E2) du tuyau d'alimentation (TA) et une extrémité d'un tuyau plongeur (TP) propre à être logé dans ledit réservoir (RL).

5. Dispositif selon l'une des revendications 1 à 4, **caractérisé en ce qu'**il comprend ledit réservoir (RL).

6. Equipement (PV) comprenant au moins un dispositif de traitement d'air (D2) et une paroi (PE) munie d'au moins une ouverture (OV) dont l'accès est contrôlé par un carter (CR), **caractérisé en ce qu'**il comprend en outre un dispositif de fourniture de liquide (D1) selon l'une des revendications précédentes et couplé à un réservoir (RL) contenant un liquide et audit dispositif de traitement d'air (D2).

7. Equipement selon la revendication 6, **caractérisé en ce que** ledit dispositif de traitement d'air (D2) est agencé pour transformer le liquide assaini issu dudit réservoir (RL) en petites gouttes au moyen d'une technique choisie dans un groupe comprenant au moins la nébulisation, la brumisation et la pulvérisation.

8. Equipement (PV) selon l'une des revendications 6 à 7, **caractérisé en ce qu'**il constitue un plafonnier d'un véhicule.

## Patentansprüche

1. Vorrichtung (D1) zum Zuführen einer sanierten Flüssigkeit zu einer Luftbehandlungsvorrichtung (D2), die in einer Anlage (PV) untergebracht ist, die Zuführmittel (MAL) umfasst, die geeignet sind, dicht mit einer Auslassöffnung (OS), einem Behälter (RL), der eine Flüssigkeit enthält und in der Anlage (PV) durch eine Öffnung (OV), die in einer Wand (PE) definiert ist, und einer Zuführöffnung (OA) der Luftbehandlungsvorrichtung (D2) untergebracht ist, gekoppelt zu werden, wobei die Vorrichtung **dadurch gekennzeichnet ist, dass** sie Sanierungsmittel (MAS) umfasst, die geeignet sind, in die Anlage (PV) eingesetzt zu werden PV) hinter einem Gehäuse (CR), das den Zugang zu der Öffnung (OV) steuert und so beschaffen ist, dass es die in dem Behälter (RL) enthaltene Flüssigkeit durch eine gewählte Behandlung saniert, wobei die Sanierungsmittel (MAS) so beschaffen sind, dass sie eine Lichtbehandlung durchführen, wobei das Gehäuse (CR) aus einem durchscheinenden Material hergestellt ist, das geeignet ist, einen Teil des von den Sanierungsmitteln (MAS) der Flüssigkeitsversorgungseinrichtung (D1) bei einer Behandlung erzeugten Lichts durchzulassen.

2. Vorrichtung nach Anspruch 1, **dadurch gekennzeichnet, dass** die Sanierungsmittel (MAS) mindestens eine UV-Lichtquelle umfassen.

3. Vorrichtung nach Anspruch 1, **dadurch gekennzeichnet, dass** die Sanierungsmittel (MAS) einen Filter umfassen, der geeignet ist, die Flüssigkeit chemisch zu behandeln.

4. Vorrichtung nach einem der Ansprüche 1 bis 3, **dadurch gekennzeichnet, dass** die Zuführmittel (MAL) i) ein Zuführrohr (TA) umfassen, das ein erstes Ende (E1), das mit der Zuführöffnung (OA) verbunden werden kann, und ein zweites Ende (E2) umfasst, und ii) einen Stopfen (B), der eine Öffnung aufweist, mit der das zweite Ende (E2) des Zuführrohrs (TA) und ein Ende eines Tauchrohrs (TP) dicht verbunden sind, das in dem Behälter (RL) aufgenommen werden kann.

5. Vorrichtung nach einem der Ansprüche 1 bis 4, **dadurch gekennzeichnet, dass** sie den Behälter (RL) umfasst.

6. Ausrüstung (PV), die mindestens eine Luftbehandlungsvorrichtung (D2) und eine Wand (PE) umfasst, die mit mindestens einer Öffnung (OV) versehen ist, deren Zugang durch ein Gehäuse (CR) kontrolliert wird, **dadurch gekennzeichnet, dass** sie außerdem eine Flüssigkeitsversorgungsvorrichtung (D1) nach einem der vorhergehenden Ansprüche umfasst, die mit einem Flüssigkeitsbehälter (RL) und der Luftbehandlungsvorrichtung (D2) gekoppelt ist.

7. Vorrichtung nach Anspruch 6, **dadurch gekennzeichnet, dass** die Luftbehandlungsvorrichtung (D2) so angeordnet ist, dass sie die aus dem Tank (RL) stammende sanierte Flüssigkeit mittels einer Technik, die aus einer Gruppe ausgewählt ist, die mindestens Vernebeln, Sprühen und Zerstäuben umfasst, in kleine Tropfen umwandelt.

8. Ausrüstung (PV) nach einem der Ansprüche 6 bis 7, **dadurch gekennzeichnet, dass** sie eine Deckenleuchte eines Fahrzeugs bildet.

## Claims

1. Device (D1) for supplying a purified liquid to an air treatment device (D2) housed in an equipment (PV) comprising supply means (MAL) adapted to be coupled in a sealed manner to an outlet orifice (OS), a reservoir (RL) containing a liquid and housed in said equipment (PV) in a removable manner by an opening (OV) defined in a wall (PE), and to a supply orifice (OA) of said air treatment device (D2), the device being **characterized in that** it comprises sanitation means (MAS) adapted to be placed in said air treatment device (D2) equipment (PV) behind a housing (CR) controlling access to said opening (OV), and arranged to sanitize said liquid contained in said reservoir (RL) by a selected treatment, said sanitizing means (MAS) being arranged to carry out a light treatment, said housing (CR) being made of a translucent material capable of letting through a part of the light produced by said sanitizing means (MAS) of the liquid supply device (D1) during a treatment.

2. Device according to claim 1, **characterized in that** said sanitizing means (MAS) comprise at least one source of ultraviolet light.

3. Device according to claim 1, **characterized in that** said sanitizing means (MAS) comprise a filter suitable for chemically treating said liquid.

4. Device according to one of claims 1 to 3, **characterized in that** said supply means (MAL) comprise i) a supply pipe (TA) comprising a first end (E1), adapted to be connected to said supply port (OA), and a second end (E2), and ii) a plug (B) comprising an orifice to which said second end (E2) of the supply pipe (TA) and an end of a plunger pipe (TP) adapted to be housed in said reservoir (RL) are connected in a sealed manner.

5. Device according to one of Claims 1 to 4, **characterized in that** it comprises said reservoir (RL).

6. Equipment (PV) comprising at least one air treatment device (D2) and a wall (PE) provided with at least one opening (OV) whose access is controlled by a housing (CR), **characterized in that** it further comprises a liquid supply device (D1) according to one of the preceding claims and coupled to a liquid-containing reservoir (RL) and to said air treatment device (D2).

7. Equipment according to claim 6, **characterized in that** said air treatment device (D2) is arranged to convert the purified liquid from said reservoir (RL) into small drops by means of a technique selected from a group comprising at least nebulization, fogging and spraying.

8. Equipment (PV) according to one of Claims 6 to 7, **characterized in that** it constitutes a ceiling lamp of a vehicle.
